# EUROPEAN PATENT APPLICATION

(11) **EP 2 540 252 A1**
(43) Date of publication of application: **02.01.2013**
(21) Application number: 11852219.2
(22) Date of filing: 21.01.2011
(51) Int. Cl.: A61C 7/14, A61C 7/28

(54) **ORTHODONTIC BRACKET**

(71) Applicant: Hiro, Toshiaki, Matsumoto-shi Nagano 399-0022 (JP)
(72) Inventor: Hiro, Toshiaki, Matsumoto-shi Nagano 399-0022 (JP)
(74) Representative: McCartney, Jonathan William
(86) International application number: PCT/JP2011/000333
(87) International publication number: WO 2012/098588

(57) **Abstract**

A orthodontics bracket (1) has a bracket body (5), an arch wire slot (4) formed on the bracket body (5), an opening/closing lid (6) for locking an arch wire, and a opening/closing lid connecting part (7) for connecting the opening/closing lid (6) to the bracket body (5) in a slidable and rotatable state. The opening/closing lid (6) is capable of moving along a movement path that passes through a closed position (6A) at which it is engaged to the bracket body (5) in a state of blocking the arch wire slot (4), an disengagement position (6B) at which it has slid from the closed position (6A) and disengaged from the bracket body (5), and an open position (6C) at which it has rotated from the disengagement position (6B) and the arch wire slot (4) has been uncovered. The opening/closing lid (6) for locking the arch wire closes in a reliable manner and does not accidentally open, and can be readily operated so as to open or close.

## Description

### TECHNICAL FIELD

The present invention relates to an orthodontics bracket provided with a self-ligation function.

### BACKGROUND ART

Normally, when orthodontic treatment is performed, fittings known as brackets are fitted onto teeth, the brackets are ligated using a wire, and the teeth are moved using the elastic strength of the wire. An ability to firmly ligate the brackets using the wire is an important factor in determining whether a sufficient orthodontic force can be obtained. However, obtaining a reliable ligation requires practice, and performing the procedure also requires a long period of time. Rubber rings or thin ligation wires are used for the ligation. However, if the ligation is too strong, the sliding performance between the wire and the brackets deteriorates, inhibiting the movement of teeth. In contrast, if the ligation is incomplete, insufficient orthodontic force is obtained.

With an aim to eliminate discrepancies due to differences in the procedure, and to reduce the procedure time taken for treatment, a large variety of brackets in which the brackets themselves comprise a ligation mechanism (i.e., self-ligating brackets) are available from orthodontic manufacturers. Brackets of such description include brackets having a wire lock mechanism comprising a rotating-type opening/closing lid having a pivot structure or a hinge structure, or brackets having a wire lock mechanism comprising a sliding-type opening/closing lid similar to a sliding door. The former brackets, comprising a rotating-type opening/closing lid, are disclosed in Patent Documents 1 and 2; and the latter brackets, comprising a sliding-type opening/closing lid, are disclosed in Patent Documents 3 and 4.

### [Prior Art Document]

### [Patent Documents]

[Patent Document 1] JP-A 2006-528007
[Patent Document 2] JP-A 2003-525689
[Patent Document 3] JP-A H05-146457
[Patent document 4] JP-A 2009-207933

### DISCLOSURE OF THE INVENTION

### PROBLEMS TO BE SOLVED BY THE INVENTION

However, conventionally known self-ligation orthodontics brackets have the following problems.
(1) In brackets having a sliding-type self-ligation mechanism, the opening/closing lid cannot be closed if the arch wire becomes unseated. Therefore, the arch wire must be firmly held down. However, it is difficult to close the opening/closing lid while holding down the arch wire in a small oral cavity. In particular, in an instance in which the brackets are attached to the reverse side of the teeth, use of self-ligating brackets may conversely make the operation more difficult than normal ligation.
(2) In brackets having a rotating-type self-ligation mechanism, the opening/closing lid may inadvertently open if the elastic force of the arch wire presses the opening/closing lid. The opening/closing lid, once open, cannot be closed by the patient by him/herself. Movement of the teeth will therefore be disrupted.
(3) Providing a self-ligation mechanism increases the size and the thickness of the brackets.
(4) The structure and the design of the lid is restricted by whether the direction of insertion of the arch wire is horizontal or vertical (i.e., whether a horizontal slot or a vertical slot is present). A self-ligation mechanism that can accommodate both has not been conceived up to now.
(5) Self-ligating brackets include those in which the lid easily breaks; since it is not possible to ligate a wire in such an instance, the treatment is disrupted.
(6) There have been observed frequent instances in which providing a self-ligation mechanism increases the complexity of the shape of the bracket; irritates the cheek mucus membrane, the tongue, or another location in the mouth; and forms an ulcer.

An object of the present invention is to provide an orthodontics bracket in which an opening/closing lid for locking a wire closes in a reliable manner, the opening/closing lid does not accidentally open, and the opening/closing lid can be readily opened or closed. Another object of the present invention is to provide an orthodontics bracket in which the bracket has a smooth shape that does not irritate the tongue or the mucous membrane. Still Another object of the present invention is to provide an orthodontics bracket that has a structure such that the opening/closing lid is not readily damaged.

### MEANS TO SOLVE THE PROBLEMS

In order to solve the above-mentioned problems, an orthodontics bracket according to the present invention is characterized in comprising:
a bracket body securely affixed to a tooth surface;
an arch wire slot formed on the bracket body;
an opening/closing lid for locking an arch wire; and
an opening/closing lid connecting part for connecting the opening/closing lid to the bracket body in a slidable and rotatable state;
wherein the opening/closing lid is capable of moving along a movement path that passes through a closed position at which the opening/closing lid is engaged to the bracket body in a state of blocking the arch wire slot, a disengagement position at which the opening/closing lid has slid in a predetermined direction from the closed position and disengaged from the bracket body, and an open position at which the opening/closing lid has rotated in a predetermined direction from the disengagement position and the arch wire slot has been uncovered.

In the orthodontics bracket according to the present invention, when the opening/closing lid in the closed position is slid, the opening/closing lid is disengaged from the bracket body. In a conventional bracket comprising a rotating-type opening/closing lid, it is difficult to lock the rotating-type opening/closing lid to the bracket body so that a sufficient degree of engagement is present. However, in the present invention, a configuration is present in which the opening/closing lid is slid and detached from the bracket body (and a configuration is present in which the opening/closing lid is slid and caused to lock to the bracket body); therefore, a sufficient degree of engagement between the opening/closing lid and the bracket body can be realized. Therefore, in contrast to a bracket having a self-ligation mechanism comprising a conventional rotating-type opening/closing lid, the elastic force from the wire does not cause the opening/closing lid to accidently open. Also, an operation for detaching the opening/closing lid from the bracket body can be readily performed.

Also, in the present invention, it is possible, after the opening/closing lid has been slid, to cause the opening/closing lid to rotate, place the arch wire slot in an uncovered state, and affix the arch wire. After the arch wire has been affixed, the opening/closing lid is moved from the open position to the disengagement position, and the arch wire slot is covered by the opening/closing lid. Therefore, in contrast to a conventional bracket comprising a sliding-type opening/closing lid, there is no need to perform a laborious operation in which the opening/closing lid is slid and the slot is closed while the arch wire is held down using a fingertip so that the arch wire does not become unseated from the slot.

The opening/closing lid connecting part for connecting the opening/closing lid to the bracket body in a slidable and rotatable manner can be configured from a pivot shaft defining a center of rotation of the opening/closing lid and an ellipsoidal long hole defining a sliding range of the opening/closing lid. In such an instance, the pivot shaft is formed on a section of one of the opening/closing lid and the bracket body, and the long hole is formed on a section of the other of the opening/closing lid and the bracket body; and the pivot shaft is inserted into the long hole in a rotatable and slidable state. The long hole may be a through hole or a blind hole (indent, groove) having a given depth. The pivot shaft and the long hole can be integrally formed in the opening/closing lid and the bracket body; therefore, the opening/closing lid can be mounted on the bracket body in a slidable and rotatable state without resulting in further complexity of the structure, an increase in the number of components, and an associated rise in cost.

The bracket body can be configured so as to comprise a base and a pair of left and right tie wings formed on a front surface of the base in a bilaterally symmetrical state set apart by a given spacing. In such an instance, each of the left and right tie wings comprises a connecting portion linked to the front surface of the base, a wing portion projecting up and down at a distal end of the connecting portion, and a slot portion; and it is possible to obtain a configuration in which the left and right slot portions define the arch wire slot. The thus structure makes it possible to ligate an arch wire to the bracket body using a ligature wire according to a conventional method in an instance in which the opening/closing lid is damaged.

In a case in which the bracket body has the above structure, the opening/closing lid may be structured so as to comprise a rear end portion having a width that allows entry between an inside end surface of each of the left and right tie wings, a lid body portion linking to the rear end portion and having a width that allows the lid body portion to cover the left and right slot portions, and a distal end portion linking to a distal end of the lid body portion and extending in a state of being curved from a front-surface side to a base side of the left and right tie wings. One of the pivot shaft and the long hole is then formed on each of mutually opposing inside end surfaces of the left and right tie wings; and the other of the pivot shaft and the long hole is formed on each of end surfaces on both sides of the rear end portion of the opening/closing lid.

In an orthodontics bracket of such configuration, in a state in which the opening/closing lid is in the closed position, the distal end portion of the opening/closing lid engages with a base-side surface portion of the left and right tie wings of the bracket body, and the opening/closing lid is locked in the closed position. When the opening/closing lid in the closed position is slid, the distal end portion of the opening/closing lid separates from the base-side surface portion of the left and right tie wings, and the opening/closing lid assumes a rotatable state.

In order for the two components, namely the bracket body and the opening/closing lid, to be brought together so that a state is obtained in which the pivot shaft formed on one of the components is affixed into the long hole formed in the other component, it is possible for the bracket body to be configured by mutually joining a pair of bilaterally symmetrical divided pieces. Alternatively, it is also possible to employ a method in which the long hole is manufactured in an uncovered state, the pivot shaft is inserted, and the long hole is subsequently blocked. In other words, an insertion groove for inserting the pivot shaft into the long hole from a direction that is perpendicular to a center axial line of the pivot shaft communicates with the long hole, and the insertion groove may be blocked after the pivot shaft is inserted into the long hole.

It is preferable that the front surface shape of the opening/closing lid is a convex-curved shape; and a front surface shape of the left and right tie wings of the bracket body is defined by a convex-curve shape linking, in a smooth manner, to the convex-curve-shaped front surface of the opening/closing lid in the closed position. With this configuration, in a state in which the opening/closing lid is closed, the lip-side front surface shape of the orthodontics bracket is a smooth surface shape that does not irritate the tongue or the oral cavity.

### BRIEF DESCRIPTION OF THE DRAWINGS

FIG. 1(a) is a perspective view showing, from the front, an orthodontics bracket to which the present invention is applied in a state in which the opening/closing lid is in a closed state, and FIG. 1(b) is an explanatory view showing the opening/closing lid-connecting part of the orthodontics bracket;
FIG. 2(a) is a perspective view showing, from the front, the orthodontics bracket of FIG. 1 in a disengaged state in which the opening/closing lid has been slid upwards, and FIG. 2(b) is an explanatory view showing the opening/closing lid-connecting part of the orthodontics bracket;
FIG. 3(a) is a perspective view showing, from the front, the orthodontics bracket of FIG. 2 in an open state in which the opening/closing lid has been rotated downwards, and FIG. 3(b) is an explanatory view showing the opening/closing lid-connecting part of the orthodontic bracket.

### MODE FOR CARRYING OUT THE INVENTION

An embodiment of the orthodontics bracket to which the present invention has been applied will now be described with reference to the accompanying drawings.

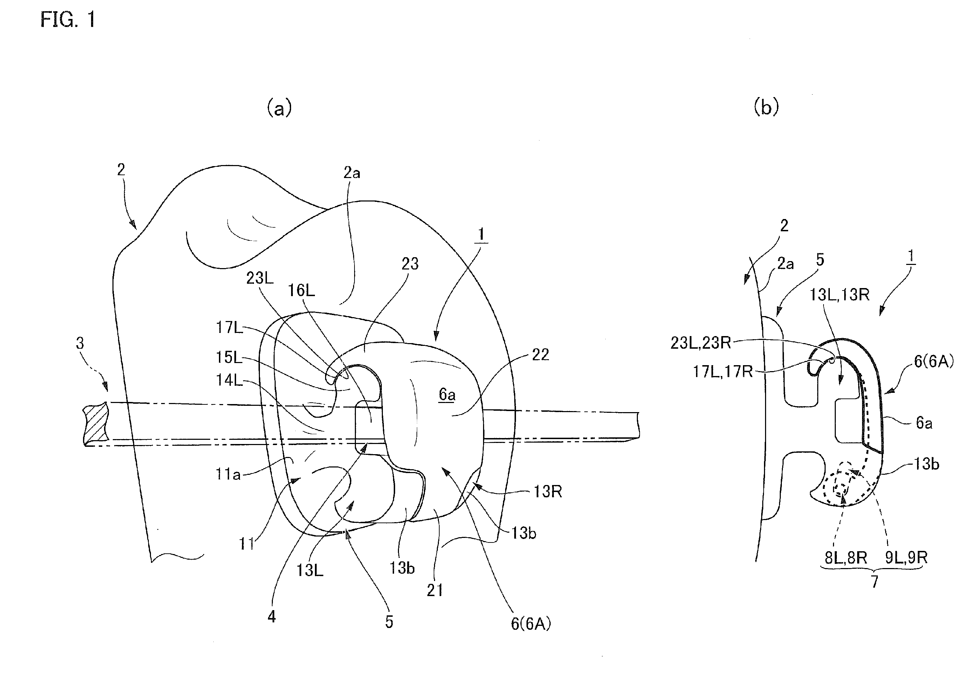

With reference to FIG. 1, the orthodontics bracket 1 according to the present embodiment is used by securing to, e.g., a tooth surface, e.g., a tongue-side tooth surface 2a, of a molar 2 by means of an adhesive (not shown). In an orthodontics treatment, an orthodontics bracket 1 is secured to a plurality of teeth, and an arch wire 3 is affixed in a state of being passed through an arch wire slot 4 of each of the orthodontics brackets 1.

The orthodontics bracket 1 comprises a bracket body 5 securely affixed to the tooth surface 2a, and an opening/closing lid 6 for locking an arch wire. An opening/closing lid connecting part 7, for connecting the opening/closing lid 6 to the bracket body 5 in a slidable and rotatable state, is formed between the bracket body 5 and the opening/closing lid 6. The arch wire slot 4 is formed in the bracket body 5. The arch wire 3 passed through the arch wire slot 4 is held by the opening/closing lid 6 so as to not dislodge from the slot 4.

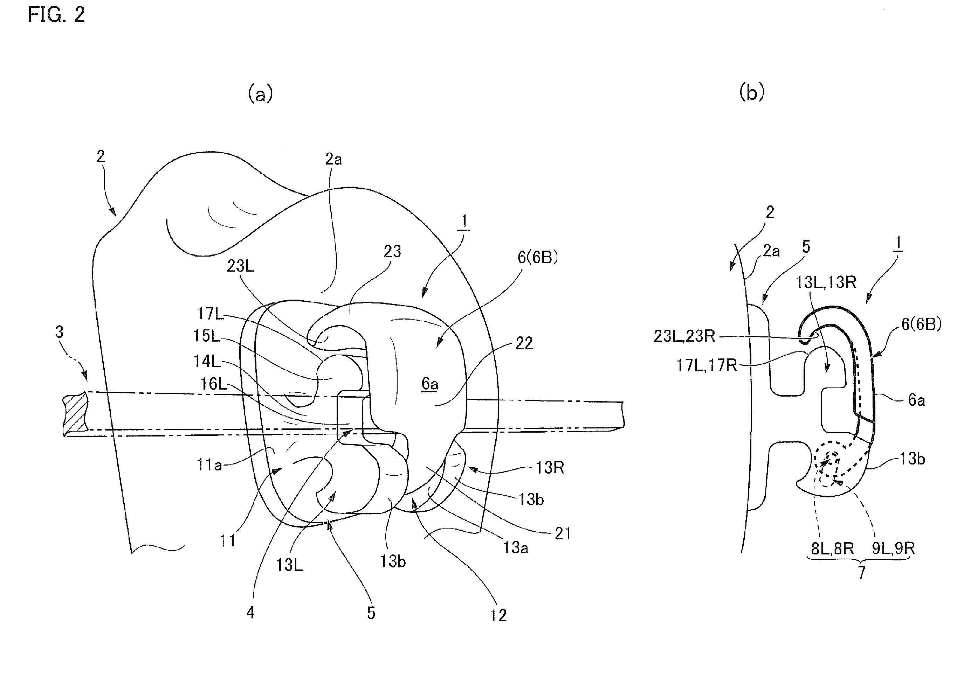

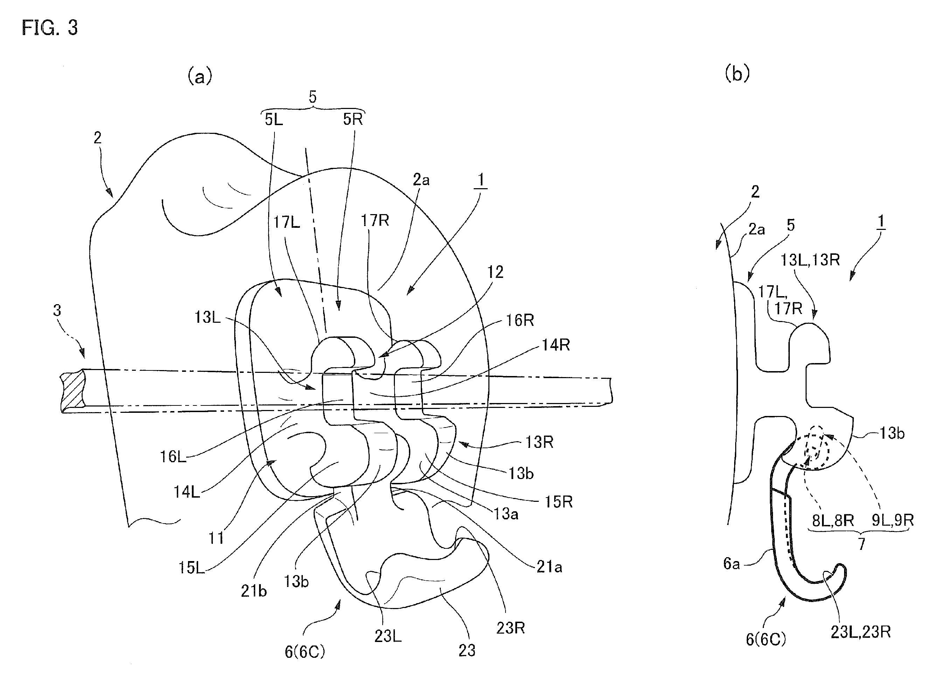

With reference to FIGS. 1 through 3, the opening/closing lid 6 is capable of moving, from a closed position 6A shown in FIG. 1 at which the opening/closing lid 6 is engaged to the bracket body 5 in a state of blocking the arch wire slot 4, to an open position 6C shown in FIG. 3 via disengagement position 6B shown in FIG. 2. The opening/closing lid 6 is also capable of moving from the open position 6C to the closed position 6A via the disengagement position 6B. The disengagement position 6B shown in FIG. 2 is a position at which the opening/closing lid 6 has slid, as a whole, diagonally upwards in a linear fashion from the closed position 6A and disengaged from the bracket body 5. The open position 6C shown in FIG. 3 is a position at which the opening/closing lid 6 has rotated, in a direction away from the bracket body 5, about a rotational center line that is positioned at a rear end portion below the opening/closing lid 6 and that extends in a direction parallel to the arch wire slot 4; and the arch wire slot 4 has been uncovered in the forward direction.

The opening/closing lid connecting part 7 between the bracket body 5 and the opening/closing lid 6 is configured from a pair of left and right pivot shafts 8L, 8R defining a center of rotation of the opening/closing lid 6 and a pair of left and right ellipsoidal long holes 9L, 9R defining the sliding range of the opening/closing lid 6. The pivot shafts 8L, 8R are integrally formed on the opening/closing lid 6, and the long holes 9L, 9R are integrally formed in the bracket body 5. It shall be apparent that the long holes 9L, 9R may be formed on the side of the opening/closing lid 6 and the pivot shafts 8L, 8R are formed on the side of the bracket body 5 instead. The pivot shaft 8L is inserted into the corresponding long hole 9L in a rotatable and slidable state, and the pivot shaft 8R is inserted into the corresponding long hole 9R in a rotatable and slidable state.

The structure of each of the sections will now be described in further detail. First, the bracket body 5 comprises a base 11 that has an overall rectangular plate shape, and a pair of left and right tie wings 13L, 13R formed, in a bilaterally symmetrical state so as to be set apart by a given spacing 12 (see FIGS. 2, 3), on a front surface 11a of the base 11. Each of the left and right tie wings 13L, 13R comprises a connecting portion 14L, 14R linked to the front surface 11a of the base 11, the connecting portion 14L, 14R having a narrow portion partway along; and a wing portion 15L, 15R projecting up and down at a distal end of the connecting portion 14L, 14R. A slot portion 16L, 16R is formed on the wing portion 15L, 15R. The left and right slot portions define the arch wire slot 4.

The opening/closing lid 6 comprises a rear end portion 21 having a width that allows entry between inside end surfaces 13a of the left and right tie wings 13L, 13R (i.e., into the spacing 12). A lid body portion 22 having a width that allows the lid body portion 22 to cover the left and right slot portions 16L, 16R links to the rear end portion 21. A distal end of the lid body portion 22 links to a distal end portion 23 extending in a state of being curved from a front-surface side towards the base 11 side of the left and right tie wings 13L, 13R.

Pivot shafts 8L, 8R protrude in a coaxial state so as to be parallel to the arch wire slot 4 from portions, of the mutually opposing inside end surfaces 13a of the left and right tie wings 13L, 13R, that are opposite end surfaces 21a, 21b on both sides of the rear end portion 21 of the opening/closing lid 6 (see FIGS. 2 and 3). The ellipsoidal long holes 9L, 9R having a given depth are formed on end surfaces 21a, 21b on both sides of the rear end portion 21 of the opening/closing lid 6. The pivot shafts 8L, 8R are shafts having a circular cross-section. The long holes 9L, 9R extend in a linear fashion in a direction that is slightly inclined forwards in relation to the up/down direction. The pivot shafts 8L, 8R may generally have a diameter of 0.3 to 0.5 mm, and the ellipsoidal long holes 9L, 9R may be formed so as to have a width that corresponds to the diameter of the pivot shafts 8L, 8R.

As shown in FIG. 1, in a state in which the opening/closing lid 6 is in the closed position 6A, a concave-curve-shaped reverse-surface-side engaging surface portion 23L, 23R on both sides of the distal end portion 23 of the opening/closing lid 6 engages with a convex-curve-shaped front-surface-side engaging surface portion 17L, 17R of the left and right tie wings 13L, 13R of the bracket body 5, the front-surface-side engaging surface portion 17L, 17R extending from an upper-end-surface portion of the tie wings 13L, 13R to a reverse-surface portion on the side towards the base 11. The reverse-surface-side engaging surface portions 23L, 23R and the front-surface-side engaging surface portions 17L, 17R have a mutually complementing front surface shape. Sliding the opening/closing lid 6 downwards from above causes the reverse-surface-side engaging surface portions 23L, 23R and the front-surface-side engaging surface portions 17L, 17R to mutually engage, and causes the opening/closing lid 6 to lock to the left and right tie wings 13L, 13R in a state of being incapable of rotating about the pivot shafts.

A front surface 6a of the opening/closing lid 6 has a convex-curve shape. The shape of a front surface 13b of a lower-side portion of the left and right tie wings 13L, 13R of the bracket body 5, the front surface 13b being exposed on either side of the rear end portion 21 of the opening/closing lid 6 (i.e., the distal-end-surface shape), is a convex-curve shape that smoothly links to a convex-curve-shaped surface 6a of the opening/closing lid 6 in the closed position 6A as can be seen in FIG. 1. Therefore, in a state in which the opening/closing lid 6 is in the closed position 6A, the front surface shape of the orthodontics bracket 1 is an overall smooth convex-curve shape that does not cause injury to the tongue or the inner surface of the oral cavity even when there is contact.

In order to allow the opening/closing lid 6 to be readily mounted on the bracket body 5, the bracket body 5 may be manufactured as divided pieces 5L, 5R in which the bracket body 5 is divided into two so that a basically bilaterally symmetrical state is obtained, as shown in FIG. 3(a). The pivot shafts 8L, 8R formed on the opening/closing lid 6 are inserted into the long holes 9L, 9R formed in the inside end surfaces 13a of the tie wings 13L, 13R of the divided pieces 5L, 5R. In this state, the left and right divided pieces 5L, 5R are joined to each other, and the bracket body 5 is manufactured. When the divided pieces 5L, 5R are joined, having the joint portion describe a curve makes it possible to join the pieces with a high degree of accuracy. As an alternative, it is also possible to employ a method in which the long holes 9L, 9R are manufactured in an uncovered state, the pivot shafts 8L, 8R are inserted into the long holes 9L, 9R, and the uncovered portions of the long holes 9L, 9R are subsequently subjected to a blocking process. A stainless steel alloy, a titanium alloy, a ceramic, a reinforced plastic, or another material generally used for an orthodontics bracket can be used for the bracket body 5 and the opening/closing lid 6.

In the orthodontics bracket 1 of the above configuration, after the bracket is secured to the tooth surface 2a, as shown in FIG. 3, the opening/closing lid 6 is put in the open position 6C, and the arch wire 3 is inserted from the front side into the arch wire slot 4 in an uncovered state. Then, as shown in FIG. 2, the opening/closing lid 6 is caused to rotate upwards and caused to stand upright so that the opening/closing lid 6 is in the disengagement position 6B. When the opening/closing lid 6 is then slid downwards, the distal end portion 23 of the opening/closing lid 6 engages with a portion, of the left and right tie wings 13L, 13R of the bracket body 5, stretching from the upper-end-surface portion to the reverse-surface portion; and a state is formed in which the distal end portion 23 is locked to the bracket body 5, as shown in FIG. 1. A state is thereby formed in which the arch wire 3 is held within the arch wire slot 4.

When the arch wire 3 is removed from the orthodontics bracket 1, the opening/closing lid 6 in the closed position 6A shown in FIG. 1 is instead slid upwards, and the opening/closing lid 6 is disengaged from the bracket body 5 as shown in FIG. 2. The opening/closing lid 6 is then caused to rotate downwards, whereby the opening/closing lid 6 reaches the open position 6C shown in FIG. 3, the arch wire slot 4 is placed in an uncovered state , and the arch wire 3 can be detached.

The orthodontics bracket 1 according to the present embodiment comprises the opening/closing lid 6 having a sliding and rotating structure not conventionally known, and the following working effects can be obtained.
(a) The lid closes in a reliable manner
(b) Other than when necessary, the lid does not inadvertently open.
(c) The bracket can be used irrespective of the direction in which the wire is inserted (i.e., horizontal slot or vertical slot) using a single self-ligation mechanism.
(d) The bracket of the same structure can be used whether the direction of the slot is upright (edgewise) or lateral (ribbon).
(e) The lid does not hold down the wire more than necessary (passive ligation).
(f) When the lid is closed, the dimension of the arch wire slot is set to be as designed; therefore, the wire is prevented from being unnecessarily loose.
(g) When the lid is closed, there is obtained a smooth front surface structure absent the complexity of the tongue-irritating profile of irregularities that are characteristic of self-ligating brackets.
(h) The lid does not readily break.
(i) Even if the lid breaks, the wire can be ligated using a conventional method.
(j) The lid can be readily opened or closed.
(k) The bracket can be used for both orthodontic correction from the outside and orthodontic correction from the reverse side, using a single structure.
(l) Teflon®, a ceramic, or another substance can be used to apply a white surface process on the front surface of the orthodontics bracket to obtain a bracket having the same color as that of the crown and having an excellent cosmetic quality.

### [Keys to symbols]

- 1: Orthodontics bracket
- 2: Molar
- 2a: Tooth surface
- 3: Arch wire
- 4: Arch wire slot
- 5: Bracket body
- 5L, 5R: Divided pieces
- 6: Opening/closing lid
- 6A: Closed position
- 6B: Disengagement position
- 6C: Open position
- 7: Opening/closing lid connecting part
- 8L, 8R: Pivot shaft
- 9L, 9R: Long hole
- 11: Base
- 11a: Front surface
- 12: Gap
- 13L, 13R: Tie wing
- 13a: Inside end surface
- 14L, 14R: Connecting portion
- 15L, 15R: Wing portion
- 16L, 16R: Slot portion
- 17L, 17R: Front-surface-side engaging surface portion
- 21: Rear end portion
- 21a: End surface
- 22: Lid body portion
- 23: Distal end portion
- 23L, 23R: Reverse-surface-side engaging surface portion

## Claims

1. An orthodontics bracket, **characterized in** comprising:
a bracket body to be securely adhered to a tooth surface;
an arch wire slot formed on the bracket body;
an opening/closing lid for locking an arch wire; and
an opening/closing lid connecting part for connecting the opening/closing lid to the bracket body in a slidable and rotatable state; wherein
the opening/closing lid is capable of moving along a movement path that passes through a closed position at which the opening/closing lid is engaged to the bracket body in a state of blocking the arch wire slot, an disengagement position at which the opening/closing lid has slid in a predetermined direction from the closed position and disengaged from the bracket body, and an open position at which the opening/closing lid has rotated in a predetermined direction from the disengagement position and the arch wire slot has been uncovered.

2. The orthodontics bracket according to claim 1, wherein:
the opening/closing lid connecting part comprises a pivot shaft defining a center of rotation of the opening/closing lid, and an ellipsoidal long hole defining a sliding range of the opening/closing lid;
the pivot shaft is formed on one of the opening/closing lid and the bracket body, and the long hole is formed on the other of the opening/closing lid and the bracket body; and
the pivot shaft is inserted in the long hole in a rotatable and slidable state.

3. The orthodontics bracket according to claim 2, wherein:
the bracket body comprises a base and a pair of left and right tie wings formed on a front surface of the base in a bilaterally symmetrical state set apart by a given spacing;
each of the left and right tie wings comprises a connecting portion linked to the front surface of the base, a wing portion projecting up and down at a distal end of the connecting portion, and a slot portion, the left and right slot portions defining the arch wire slot;
the opening/closing lid comprises a rear end portion having a width that allows entry between an inside end surface of each of the left and right tie wings, a lid body portion linking to the rear end portion and having a width that allows the lid body portion to cover the left and right slot portions, and a distal end portion linking to a distal end of the lid body portion and extending in a state of being curved from a front-surface side to a base side of the left and right tie wings;
one of the pivot shaft and the long hole is formed on each of mutually opposing inside end surfaces of the left and right tie wings;
the other of the pivot shaft and the long hole is formed on each of end surfaces on both sides of the rear end portion of the opening/closing lid;
in a state in which the opening/closing lid is in the closed position, the distal end portion of the opening/closing lid engages with a base-side surface portion of the left and right tie wings of the bracket body, and the opening/closing lid is locked in the closed position; and
when the opening/closing lid in the closed position is slid, the distal end portion of the opening/closing lid separates from the base-side surface portion of the left and right tie wings, and the opening/closing lid assumes a rotatable state.

4. The orthodontics bracket according to claim 3, wherein
the bracket body is configured by mutually joining a pair of bilaterally symmetrical divided pieces.

5. The orthodontics bracket according to claim 3, wherein:
the long hole is communicated with an insertion groove for inserting the pivot shaft into the long hole from a direction that is perpendicular to a center axial line of the pivot shaft; and
the insertion groove is blocked after the pivot shaft is inserted into the long hole.

6. The orthodontics bracket according to any of claims 3 through 5, wherein:
the front surface shape of the opening/closing lid is a convex-curved shape; and
a front surface of the left and right tie wings of the bracket body is defined by a convex-curve shape linking, in a smooth manner, to the convex-curve-shaped front surface of the opening/closing lid in the closed position.
